(19) Europäisches Patentamt
European Patent Office
Office européen des brevets

(11) EP 2 077 658 A1

(12) EUROPÄISCHE PATENTANMELDUNG

(43) Veröffentlichungstag:
08.07.2009 Patentblatt 2009/28

(51) Int Cl.:
*H04M 3/38* (2006.01)

(21) Anmeldenummer: 08007787.8

(22) Anmeldetag: 22.04.2008

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(30) Priorität: 04.01.2008 EP 08000118

(71) Anmelder: SIEMENS AKTIENGESELLSCHAFT
80333 München (DE)

(72) Erfinder:
• Andrassy, Bernt Dr.
80639 München (DE)
• Leutelt, Lutz Dr.
81545 München (DE)

(54) **Verfahren zur Bereitstellung eines Dienstes für einen Nutzer**

(57) Die Erfindung betrifft ein Verfahren zur Bereitstellung eines Dienstes für einen Nutzer, wobei der Dienst für eine vorgegebene Nutzergruppe vorgesehen ist und über eine Kommunikationsverbindung bereitgestellt wird. In dem Verfahren wird über eine erste Kommunikationsverbindung eine Anfrage eines Nutzers zum Zugang zu dem Dienst in einer Zugangskontrolleinheit empfangen. Über eine zweite Kommunikationsverbindung wird eine Sprachverbindung zwischen dem Nutzer und einer Sprachverarbeitungseinheit hergestellt. In der Sprachverarbeitungseinheit wird über die zweite Kommunikationsverbindung die Stimme des Nutzers mittels einer Sprachprobe erfasst und zumindest ein erstes Kriterium überprüft, wobei das erste Kriterium erfüllt ist, wenn der Nutzer basierend auf einem stimmbasierten Klassifikationsverfahren der vorgegebenen Nutzergruppe zugeordnet wird. Falls zumindest das erste Kriterium erfüllt ist, wird dem Nutzer der Zugang zu dem Dienst ermöglicht. Die Erfindung zeichnet sich durch die Verwendung eines stimmbasierten Klassifikationsverfahrens zur Authentifikation eines Nutzers für einen Dienst aus, der einer vorgegebenen Nutzergruppe vorbehalten ist. Insbesondere wird hierbei ein Alters- und oder Geschlechts-Klassifikationsverfahren eingesetzt, wobei die vorgegebene Nutzergruppe durch ihr Alter und ihr Geschlecht spezifiziert ist. Der für eine solche Nutzergruppe vorgesehene Dienst ist insbesondere ein internetbasierter Dienst, beispielsweise ein Forum, in dem sich Personen einer bestimmten Altersgruppe austauschen. Durch die Authentifikation über die Stimme wird ein einfacher Mechanismus geschaffen, wie zu der vorgegebenen Nutzergruppe gehörende Personen einen Zugang zu dem Dienst erhalten können.

FIG 1

EP 2 077 658 A1

**Beschreibung**

Die Erfindung betrifft ein Verfahren zur Bereitstellung eines Dienstes für einen Nutzer sowie eine entsprechende Vorrichtung.

In einer Vielzahl von Anwendungen ist es erforderlich, bestimmte Nutzergruppen vor Eindringlingen zu schützen, welche unbefugt einen Dienst nutzen, der nur für die Nutzergruppe vorgesehen ist. Oftmals lassen sich bestimmte Nutzergruppen durch Parameter charakterisieren, welche aus der Stimme der Nutzer abgeleitet werden können. Insbesondere sind aus dem Stand der Technik Sprachdialogsysteme bekannt, welche rechnergestützt die Spracheingaben eines Nutzers analysieren können. Beispielsweise zeigt die Druckschrift DE 20 2007 009 355 U1 ein Sprachdialogsystem, mit dem der Sprecher nach Alter und Geschlecht klassifiziert werden kann.

Heutzutage gibt es insbesondere bei Internet-Anwendungen eine Vielzahl von Diensten, die nur bestimmten Nutzergruppen zur Verfügung stehen sollen. Ein Beispiel sind sog. Foren, in denen sich z.B. nur Jugendliche untereinander austauschen. Bei solchen Foren ist es besonders wichtig, dass die an den Foren teilnehmenden Jugendlichen gegen unbefugtes Eindringen von unbefugten älteren Personen geschützt werden, welche sich unerlaubt Informationen über die Jugendlichen verschaffen möchten.

Um sich für einen geschützten Dienst anzumelden, wird von den Dienstbetreibern in der Regel ein Nachweis über die Eigenschaften des Nutzers, insbesondere über sein Alter und sein Geschlecht, gefordert. Dies geschieht beispielsweise dadurch, dass ein Nutzer, der sich für einen Dienst anmelden möchte, an den Dienstbetreiber eine Kopie seines Personalausweises sendet bzw. seine Kreditkartendaten bekannt gibt. Dabei ist es jedoch problematisch, dass der Nutzer unter Umständen mehr Daten preisgeben muss als für die Nutzung des Dienstes erforderlich sind. Hierdurch eröffnet sich die Möglichkeit von Missbrauch, insbesondere durch unbefugte Datenweitergabe bzw. durch Kreditkartenbetrug. Darüber hinaus besitzen oftmals jüngere Nutzer keine entsprechenden Dokumente zur Identifikation ihrer Person oder die zur Verifikation übermittelten Daten sind nicht zuverlässig und können leicht gefälscht werden.

Aufgabe der Erfindung ist es deshalb, ein Verfahren zur Bereitstellung eines Dienstes für einen Nutzer zu schaffen, welches es dem Nutzer ermöglicht, sich auf einfache und sichere Weise zur Teilnahme an einem für eine vorgegebene Nutzergruppe vorgesehenen Dienst zu authentifizieren.

Diese Aufgabe wird durch die unabhängigen Patentansprüche gelöst. Weiterbildungen der Erfindung sind in den abhängigen Ansprüchen definiert.

Mit dem erfindungsgemäßen Verfahren wird ein Dienst für einen Nutzer bereitgestellt, wobei der Dienst nur für eine vorgegebene Nutzergruppe vorgesehen ist und über eine Kommunikationsverbindung, insbesondere über das Internet, bereitgestellt wird. Der Dienst kann dabei beispielsweise ein geschützter Bereich eines webbasierten Dienstes sein, wie z.B. ein Forum, das nur Personen einer bestimmten Altersgruppe betreten können, um sich untereinander auszutauschen und kennenzulernen.

Erfindungsgemäß wird in einem Schritt a) über eine erste Kommunikationsverbindung, welche der Kommunikationsverbindung entsprechen kann, über welche der Dienst bereitgestellt wird, eine Anfrage des Nutzers zum Zugang zu dem Dienst in einer Zugangskontrolleinheit empfangen. Die Zugangskontrolleinheit ist dabei z.B. ein entsprechender Server, der über das Internet zugänglich ist. In einem Schritt b) wird über eine zweite Kommunikationsverbindung, welche gegebenenfalls die gleiche Kommunikationsverbindung wie die erste sein kann, jedoch auch von dieser abweichen kann, eine Sprachverbindung zwischen dem Nutzer und einer Sprachverarbeitungseinheit hergestellt. In einem Schritt c) wird in der Sprachverarbeitungseinheit über die zweite Kommunikationsverbindung die Stimme des Nutzers mittels einer von diesem gesprochenen Sprachprobe erfasst und anschließend wird zumindest ein erstes Kriterium überprüft. Dieses erste Kriterium ist dann erfüllt, wenn der Nutzer basierend auf einem stimmbasierten Klassifikationsverfahren der vorgegebenen Nutzergruppe zugeordnet wird. Schließlich wird in einem Schritt d) dem Nutzer der Zugang zu dem Dienst ermöglicht, falls zumindest das erste Kriterium erfüllt ist.

Das erfindungsgemäße Verfahren bedient sich zur Bereitstellung eines Dienstes eines stimmbasierten Klassifikationsverfahrens, so dass auf einfache Weise über eine Sprachverbindung eine Identifikation eines Nutzers dahingehend erfolgen kann, ob er die Kriterien der vorgegebenen Nutzergruppe erfüllt, für die der bereitgestellte Dienst gedacht ist. Als stimmbasiertes Klassifikationsverfahren können aus dem Stand der Technik bekannte Klassifikationsverfahren verwendet werden. Beispielsweise kann das in der eingangs erwähnten Druckschrift DE 20 2007 009 355 U1 offenbarte Verfahren eingesetzt werden sowie das in der deutschen Patentanmeldung DE 10 2007 043 870.4 beschriebene Verfahren.

In einer bevorzugten Variante des erfindungsgemäßen Verfahrens wird einem Nutzer, für den das zumindest erste Kriterium erfüllt ist, der Zugang zu dem Dienst dadurch ermöglicht, dass ihm über die erste und/oder zweite Kommunikationsverbindung Authentifikationsdaten zum Zugang zu dem Dienst bereitgestellt werden. Dies kann beispielsweise durch die Übermittlung einer entsprechenden Nachricht in der Form einer Email oder SMS erfolgen, jedoch können dem Nutzer die Daten alternativ oder zusätzlich auch über eine Sprachverbindung mitgeteilt werden.

In einer besonders bevorzugten Variante der Erfindung ist das stimmbasierte Klassifikationsverfahren ein Alters- und/oder Geschlechts-Klassifikationsverfahren, welches basierend auf der erfassten Stimme des Nutzers das Alter und/oder das Geschlecht des Nutzers klassifiziert. Solche Klassifikationsverfahren sind hinlänglich aus dem Stand der Technik bekannt, beispielhaft sei auf die eingangs erwähnte Druckschrift und Patentanmeldung verwiesen. Ein solches Alters- und/oder Geschlechts-Klassifikationsverfahren klassifiziert dabei den Nutzer insbesondere in das Geschlecht männlich oder weiblich und/oder in eine Altersgruppe aus einer Mehrzahl von Altersgruppen.

In einer weiteren bevorzugten Ausführungsform der Erfindung wird der Nutzer in Schritt c) durch die Sprachverarbeitungseinheit aufgefordert, einen vorbestimmten Text als Sprachprobe nachzusprechen, und anschließend wird ein zweites Kriterium überprüft, wobei das zweite Kriterium erfüllt ist, wenn der durch ein Spracherkennungsverfahren erkannte nachgesprochene Text im Wesentlichen mit dem vorgegebenen Text übereinstimmt, und wobei dem Nutzer ein Zugang zu dem Dienst nur ermöglicht wird, wenn zumindest das erste und zweite Kriterium erfüllt sind. Auf diese Weise wird ein Missbrauch dahingehend vermieden, dass sich ein unberechtigter Eindringling, der nicht zur vorgegebenen Nutzergruppe gehört, einer aufgenommenen Stimme einer Person mit Charakteristika der vorgegebenen Nutzergruppe bedient, um sich Zugang zu dem Dienst zu verschaffen. Besonders effektiv wird ein solcher Missbrauch dadurch verhindert, dass der vorgegebene Text durch einen Zufallsgenerator erzeugt wird und dem Nutzer auf einer Anzeigeeinheit angezeigt wird bzw. dem Nutzer über die bestehende Sprachverbindung vorgelesen wird. Eine Übermittlung eines auf der Anzeigeeinheit anzuzeigenden Textes kann dabei beispielsweise über die zweite Kommunikationsverbindung oder eine beliebige andere Kommunikationsverbindung erfolgen.

In einer besonders bevorzugten Ausführungsform des erfindungsgemäßen Verfahrens wird als stimmbasiertes Klassifikationsverfahren ein Verfahren verwendet, welches einen Konfidenzwert bestimmt. Dieser Wert gibt an, mit welcher Wahrscheinlichkeit eine Klassifikation eines Nutzers in der vorgegebenen Nutzergruppe korrekt ist, wobei im Falle, dass der Konfidenzwert einen ersten Schwellenwert überschreitet, der Nutzer der vorgegebenen Nutzergruppe zugeordnet wird. Der erste Schwellenwert ist dabei vorzugsweise einstellbar, so dass je nach Anwendungsfall ein sehr hoher Schutz der vorgegebenen Nutzergruppe durch einen hohen ersten Schwellenwert oder gegebenenfalls ein entsprechend verminderter Schutz mit einem niedrigeren ersten Schwellenwert erreicht werden kann. Die Einstellung eines hohen Schwellenwerts hat den Nachteil, dass es öfters zur Abweisung von Nutzern kommt, die eigentlich zu der Nutzergruppe gehören. Jedoch wird bei besonders zu schützenden Nutzergruppen, wie z.B. jungen weiblichen Personen, ein sehr hoher Schutz erreicht. In Anwendungsfällen, in denen das gelegentliche Eindringen eines unbefugten Nutzers in Kauf genommen wird, ist der erste Schwellenwert entsprechend gering eingestellt.

Der obige Konfidenzwert kann auch dazu genutzt werden, solche Nutzer, die nicht mit ausreichender Sicherheit der vorgegebenen Nutzergruppe zugeordnet werden können, nochmals zu überprüfen. Dies geschieht dadurch, dass zumindest ein Teil der Nutzer, die mit einem Konfidenzwert unterhalb eines zweiten, über dem ersten Schwellenwert liegenden Schwellenwerts der vorgegebenen Nutzergruppe zugeordnet werden, einem menschlichen Operator über eine Benutzerschnittstelle mitgeteilt werden, wobei der menschliche Operator über die Benutzerschnittstelle die erfasste Stimme des oder der Nutzer des zumindest einen Teils der Nutzer abhören kann und die Nutzer manuell klassifizieren kann, wobei ein drittes Kriterium für einen Nutzer erfüllt ist, wenn der menschliche Operator den Nutzer in die vorgegebene Nutzergruppe klassifiziert, und wobei nur bei der Erfüllung des dritten Kriteriums dem Nutzer ein Zugang zu dem Dienst ermöglicht wird. Sollte der menschliche Operator beim Abhören der erfassten Stimme des jeweiligen Nutzers keine eindeutige Klassifizierung vornehmen können, besteht in einer bevorzugten Ausführungsform auch die Möglichkeit, dass der menschliche Operator über eine Kommunikationsverbindung, insbesondere über eine Sprachverbindung, Kontakt zu dem Nutzer aufnimmt, um weitere Daten zur Klassifizierung des Nutzers, insbesondere eine weitere Sprachprobe, zu erfassen.

Man macht sich bei der Einbeziehung von menschlichen Operatoren die Erkenntnis zu Nutze, dass menschliche Operatoren die Stimme eines Nutzers in einigen Fällen besser bewerten können als dies mit stimmbasierten Klassifikationsverfahren möglich ist, so dass bei Nutzern mit unklarer Zuordnung zur Nutzergruppe diese Überprüfung mit dem menschlichen Operator vorgenommen wird. Die zusätzliche Überprüfung mit dem menschlichen Operator kann beispielsweise bei der erstmaligen Anmeldung für den Dienst erfolgen, wobei in diesem Fall einem Nutzer des zumindest einen Teils der Nutzer Authentifikationsdaten zum Zugang zu dem Dienst nur bereitgestellt werden, wenn das dritte Kriterium erfüllt ist. Ebenso kann eine Überprüfung des Nutzers durch einen menschlichen Operator auch nach einem bereits bereitgestellten Zugang zu dem Dienst erfolgen. In diesem Fall wird der Zugang zu dem Dienst für einen Nutzer gesperrt, wenn das dritte Kriterium für den Nutzer nicht erfüllt ist.

Die von dem menschlichen Operator vorgenommenen Klassifikationen von Nutzern mit den zugeordneten erfassten Stimmen werden in einer bevorzugten Variante als Trainingsdaten dem stimmbasierten Klassifikationsverfahren bereitgestellt. Auf diese Weise kann das Klassifikationsverfahren schrittweise verbessert werden.

In einer weiteren bevorzugten Ausführungsform der Erfindung wird in Schritt c) des Verfahrens aus der erfassten Stimme des Nutzers mit einem Sprecher-Erkennungsverfahren die Stimmcharakteristik des Nutzers ermittelt. Vorzugsweise wird dabei in Schritt c) ein viertes Kriterium überprüft, wobei das vierte Kriterium erfüllt ist, wenn die Veränderung der Stimmcharakteristik des Nutzers innerhalb der Sprachprobe nicht größer als ein vorbestimmtes Maß ist, wobei nur bei der Erfüllung des vierten Kriteriums dem Nutzer der Zugang zu dem Dienst ermöglicht wird. Auf diese Weise wird sichergestellt, dass unbefugte Nutzer erkannt werden, welche eine Stimme imitieren, die bei der Imitation in der Sprachprobe verrutscht. Diesen Nutzern wird ein Zugang zu dem Dienst verweigert.

Ebenso kann Schritt c) ein fünftes Kriterium überprüft werden, wobei das fünfte Kriterium für einen Nutzer erfüllt ist, wenn seine Stimmcharakteristik zu den Stimmcharakteristika der Nutzer einer Nutzermenge eine Ähnlichkeit aufweist, die unter einem vorbestimmten Maß liegt, wobei nur bei der Erfüllung des fünften Kriterium dem Nutzer ein Zugang zu dem Dienst ermöglicht wird. Auf diese Weise wird ein unbefugtes Eindringen von Nutzern verhindert, welche sich der Stimme ein und derselben Person bedienen, wobei diese Person eine Stimme aufweist, mit der sie der vorgegebenen Nutzergruppe zugeordnet wird.

Um die Überprüfung der Stimmcharakteristika geeignet einzuschränken, kann die Nutzermenge, deren Stimmcharakteristika untereinander verglichen werden, entsprechend eingegrenzt werden, beispielsweise über die Telefonnummern und/oder die Standorte der Nutzer (sofern ermittelbar) und/oder die IP-Adressen der Nutzer. Das heißt, Nutzer mit ähnlichen Telefonnummern, Standorten bzw. IP-Adressen werden überprüft, da davon ausgegangen werden kann, dass Nutzer, welche sich der gleichen Stimme zum Zugang zu einem Dienst bedienen, untereinander kooperieren und mit gleichen oder ähnlichen Telefonnummern bzw. IP-Adressen Kontakt zum Sprachverarbeitungssystem aufnehmen.

In einer besonders bevorzugten Ausführungsform werden die Schritte c) und d) des erfindungsgemäßen Verfahrens nach Bereitstellung des Dienstes für einen Nutzer wiederholt, indem der Nutzer durch die Sprachverarbeitungseinheit erneut zur Erfassung seiner Stimme aufgefordert wird, wobei in Schritt d) ein bereits bestehender Zugang zu dem Dienst gesperrt wird, wenn das zumindest erste Kriterium nicht erfüllt ist.

In einer bevorzugten Variante der Erfindung wird bei einer Wiederholung des Schritts c) die aktuell mit dem Sprecher-Erkennungsverfahren ermittelte Stimmcharakteristik des Nutzers mit zumindest einer in einem der vorhergehenden Schritte c) ermittelten Stimmcharakteristik dieses Nutzers verglichen, wobei der Zugang des Nutzers zu dem Dienst gesperrt wird, wenn die aktuelle Stimmcharakteristik über ein vorbestimmtes Maß von der zumindest einen in einem der vorhergehenden Schritte c) ermittelten Stimmcharakteristik abweicht. Auf diese Weise werden z.B. unbefugte Eindringlinge erkannt, welche sich zunächst Zugang zu dem Dienst durch ein Verstellen der Stimme verschafft haben, wobei es ihnen bei einer wiederholten Überprüfung der Stimme nicht mehr gelingt, die Stimme genauso zu verstellen. Ebenso können Eindringlinge erkannt werden, die sich bei einer früheren Authentifizierung der Stimme einer Person der vorgegebenen Nutzergruppe bedient haben, wobei diese Person nicht mehr bereit ist, dem Eindringling nochmals bei einer erneuten Authentifizierung ihre Stimme zu leihen.

In einer weiteren Ausgestaltung der Erfindung wird in Schritt c) eine dem Nutzer zugeordnete Identifikation erfasst, wobei in Schritt c) die bereits von Nutzern erfassten Identifikationen mit der Identifikation des aktuellen Nutzers verglichen werden und im Falle, dass einem Nutzer mit der gleichen Identifikation wie derjenigen des aktuellen Nutzers bereits zuvor ein oder mehrere Male kein Zugang zu dem Dienst ermöglicht wurde, der aktuelle Nutzer unabhängig von der Erfüllung zumindest des ersten Kriteriums kein Zugang zu dem Dienst ermöglicht wird. Auf diese Weise werden wiederholte Eindringversuche eines Nutzers vermieden. Die dem Nutzer zugeordnete Identifikation umfasst dabei beispielsweise die Telefonnummer des Nutzers und/oder den Standort des Nutzers (sofern bekannt) und/oder die IP-Adresse des Nutzers und/oder die Lage der Mobilfunkzelle, in der sich der Nutzer befindet.

In einer weiteren, besonders bevorzugten Ausführungsform der Erfindung kann dem Nutzer eine alternative Authentifizierung zum Zugang zu dem Dienst angeboten werden, falls das zumindest erste Kriterium in Schritt d) nicht erfüllt ist.

In einer weiteren Ausgestaltung des erfindungsgemäßen Verfahrens werden dem Nutzer in Antwort auf seine Anfrage in Schritt a) eine Adresse, insbesondere eine Telefonnummer übermittelt, die der Nutzer zum Aufbau der Sprachverbindung gemäß Schritt b) des Verfahrens kontaktieren muss. Ebenso ist es möglich, dass der Nutzer in Antwort auf seine Anfrage in Schritt a) von der Sprachverarbeitungseinheit zum Aufbau der Sprachverbindung kontaktiert wird.

Die erste bzw. zweite Kommunikationsverbindung kann in dem erfindungsgemäßen Verfahren sowohl eine paketvermittelte als auch eine leitungsvermittelte Kommunikationsverbindung sein. Die erste Kommunikationsverbindung ist vorzugsweise eine Internetverbindung zwischen dem Nutzer und der Zugangskontrolleinheit und die zweite Kommunikationsverbindung ist vorzugsweise eine leitungsvermittelte Telefonverbindung und/oder eine VoIP-Verbindung (VoIP = Voice over IP) zwischen dem Nutzer und der Sprachverarbeitungseinheit.

In einer weiteren, bevorzugten Ausführungsform der Erfindung werden aus den in Schritt c) mit dem stimmbasierten Klassifikationsverfahren vorgenommenen Klassifikationen eine Klassifizierungsverteilung erzeugt. Spezielle Varianten dieser Erzeugung einer Klassifizierungsverteilung sind in der speziellen Beschreibung dargelegt.

Neben dem oben beschriebenen Verfahren betrifft die Erfindung ferner eine entsprechende Vorrichtung zur Bereitstellung eines Dienstes für einen Nutzer, wobei die Vorrichtung eine Zugangskontrolleinheit sowie eine Sprachverarbeitungseinheit umfasst, welche derart ausgestaltet ist, dass jede Variante des oben beschriebenen erfindungsgemäßen Verfahrens damit durchführbar ist.

Ausführungsbeispiele der Erfindung werden nachfolgend anhand der beigefügten Figuren detailliert beschrieben.

Es zeigen:

Fig. 1     eine schematische Darstellung, welche den Ablauf einer Ausführungsform des erfindungsgemäßen Verfahrens verdeutlicht;

Fig. 2     ein schematisches Ablaufdiagramm eines Klassifizierungsverfahrens, welches in dem erfindungsgemäßen Verfahren zur Bereitstellung eines Dienstes verwendet werden kann;

Fig. 3     ein schematisches Blockdiagramm einer Klassifizierungsvorrichtung, welche in dem erfindungsgemäßen Verfahren zur Bereitstellung eines Dienstes verwendet werden kann.

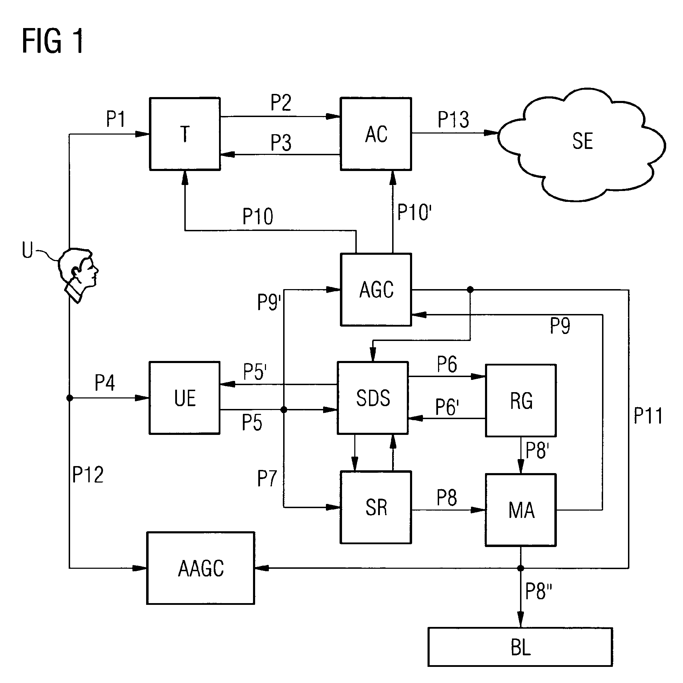

Fig. 1 zeigt eine schematische Darstellung des Ablaufs einer Ausführungsform des erfindungsgemäßen Verfahrens. Gemäß Fig. 1 möchte ein Nutzer U Zugang zu einem Dienst erhalten, der nur für eine bestimmte Alters- und Geschlechtsgruppe vorbehalten ist. Ein Beispiel einer solchen Alters-Geschlechtsgruppe ist die Zielgruppe von weiblichen Personen im Alter von ca. zwischen 13 und 18 Jahren, welche innerhalb des Dienstes miteinander kommunizieren und Informationen austauschen. Diese Nutzergruppe ist besonders gegen unbefugte Nutzer zu schützen, insbesondere gegenüber männlichen Erwachsenen, welche sich unbefugt Eintritt zu dem Dienst verschaffen, um hierdurch Kontakt zu den jungen Frauen aufzunehmen.

In der Ausführungsform der Fig. 1 beantragt zunächst der Nutzer U über das Internet, welches eine erste Kommunikationsverbindung im Sinne des Anspruchs 1 darstellt, einen Zugang zu einem geschützten Online-Dienst für die geschlossene Nutzergruppe von jungen, noch nicht volljährigen Frauen. Dies erfolgt dadurch dass der Nutzer über einen Terminal T, der insbesondere ein PC oder eine mobile Vorrichtung in der Form eines Laptops oder eines Handys ist, eine Anfrage zum Zugang zu dem Dienst via Email oder durch Ausfüllen eines Formulars in einem Browser an eine entsprechende Zugangskontrolleinheit AC richtet. Dieser Vorgang ist durch die Pfeile P1 und P2 in Fig. 1 angedeutet. Es kann sich bei der Zugangskontrolleinheit AC um einen entsprechenden Rechner bzw. Server handeln, der den Zugang zu dem Dienst steuert, wobei der Dienst schematisiert durch das Bezugszeichen SE in Fig. 1 angedeutet ist. Wie durch den Pfeil P3 wiedergegeben ist, wird nach dem Empfang einer entsprechenden Anfrage eines Nutzers U in der Zugangskontrolleinheit AC eine entsprechende Nachricht zurück an den Terminal T versandt. Die Nachricht kann hierbei eine Email, eine SMS und dergleichen sein und enthält eine Telefonnummer, welche der Nutzer anschließend anrufen kann, um sich für den Dienst SE freischalten zu lassen.

Anschließend ruft der Nutzer U über ein entsprechendes Endgerät UE, beispielsweise über ein Festnetztelefon oder ein Handy, bei einer Sprachverarbeitungseinheit an, welche über ein zentrales Sprachdialogsystem SDS mit dem Nutzer automatisiert kommunizieren kann. Mit Hilfe der Sprachverarbeitungseinheit wird eine stimmbasierte Alters-Geschlechts-Überprüfung des Nutzers U durchgeführt. Durch den Pfeil P4 ist der Vorgang des Anrufens des Nutzers U über das Endgerät UE angedeutet. Das Sprachdialogsystem SDS nimmt den Anruf entgegen, so dass eine Sprachverbindung zwischen dem Nutzer U und dem Sprachdialogsystem SDS hergestellt wird, wobei diese Sprachverbindung die zweite Kommunikationsverbindung im Sinne von Anspruch 1 darstellt. Es kann sich hierbei um eine leitungsvermittelte oder auch um eine paketvermittelte Sprachverbindung über VoIP handeln.

Das Sprachdialogsystem SDS führt den Nutzer durch die Alters-Geschlechts-Überprüfung, wobei vom Nutzer gemachte Spracheingaben durch den Pfeil P5 und Sprachausgaben vom Sprachdialogsystem SDS durch den Pfeil P5' angedeutet sind. Zunächst weist das Sprachdialogsystem SDS einen Zufallsgenerator RG an, eine zufällige Textsequenz aus Ziffern und Buchstaben zu erzeugen, wie durch den Pfeil P6 angedeutet ist. Die zufällig generierte Textsequenz wird gemäß Pfeil P6' an das Sprachdialogsystem zurückgegeben. Der Text wird anschließend automatisiert über das Sprachdialogsystem dem Nutzer vorgelesen bzw. über ein entsprechendes Anzeigemittel auf dem Endgerät UE angezeigt. Dem Nutzer wird dabei zuvor erklärt, dass er den gesprochenen Text anschließend wiederholen soll. Der Nutzer spricht schließlich den Text nach, wobei der nachgesprochene Text aufgenommen wird und einem Spracherkenner SR zugeführt wird (angedeutet zur Pfeil P7).

Der Spracherkenner führt anschließend einen Abgleich zwischen dem vom Zufallsgenerator RG erzeugten Solltext und dem vom Nutzer gesprochenen Text durch. Dieser Abgleich ist in Fig. 1 durch den Block MA angedeutet, wobei durch den Pfeil P8 die durch den Spracherkenner SR erkannte Ist-Textsequenz und durch den Pfeil P8' die tatsächlich generierte Soll-Sequenz angedeutet ist, welche miteinander verglichen werden. Mit Hilfe des Spracherkenners wird somit überprüft, ob der Nutzer wirklich die vorgegebene Textsequenz des Zufallsgenerators RG gesprochen hat. Ist dies nicht der Fall, wird der Nutzer dazu aufgefordert, die Textsequenz nochmals zu wiederholen. Bei einer bestimmten Anzahl von erfolglosen Nachsprechversuchen findet eine Abweisung des Nutzers statt, und gegebenenfalls wird die Telefonnummer des Nutzers für eine nochmalige Alters-Geschlechts-Überprüfung gesperrt, was in Fig. 1 durch den Block BL und den entsprechenden Pfeil P8" wiedergegeben ist.

Weist die vom Spracherkenner SR erkannte Ist-Textsequenz jedoch eine ausreichende Übereinstimmung mit der generierten Soll-Textsequenz auf, wird gemäß Pfeil P9 die eigentliche Alters-Geschlechts-Überprüfung ausgelöst, welche in Fig. 1 durch den Block AGC angedeutet ist. Mit Hilfe der Zwischenschaltung des Spracherkenners SR wird ein Missbrauch insbesondere dahingehend vermieden, dass ein unbefugter Nutzer über eine zuvor aufgenommene Stimme mit dem Sprachdialogsystem SDS kommuniziert, wobei die aufgenommene Stimme von einer Person stammt, welche der Alters-Geschlechts-Gruppe entspricht, für welche der Dienst SE vorbehalten ist.

In der Alters-Geschlechts-Überprüfung AGC erfolgt nunmehr eine Analyse der Sprachprobe des Nutzers, wobei diese Sprachprobe der zuvor vom Nutzer nachgesprochenen Textsequenz entspricht. Gegebenenfalls ist es auch möglich, dass eine weitere Sprachprobe zur Alters-Geschlechts-Überprüfung aufgenommen wird. In Fig. 1 ist die Zuführung der Sprachprobe zur Alters-Geschlechts-Überprüfung durch den Pfeil P9' dargestellt. Bei der Alters-Geschlechts-Überprüfung erfolgt eine Analyse der Stimme des Nutzers, wobei basierend auf der Analyse das Alter und das Geschlecht des Nutzers klassifiziert wird. Hierbei können hinlänglich aus dem Stand der Technik bekannte Alters-Geschlechts-Klassifizierungsverfahren eingesetzt werden, insbesondere solche Verfahren, die bereits in dem eingangs erwähnten Gebrauchsmusterschrift DE 20 2007 009 355 U1 sowie in der deutschen Patentanmeldung DE 10 2007 043 870.4 beschrieben sind. Der gesamte Offenbarungsgehalt der Gebrauchsmusterschrift und der Patentanmeldung werden durch Verweis zum Inhalt der vorliegenden Anmeldung gemacht.

In der hier beschriebenen Ausführungsform wird eine spezielle Ausprägung eines statistischen Modells zur Identifikation der Ziel-Nutzergruppe von Mädchen im Alter zwischen 13 und 18 Jahren verwendet. Zur Modellgenerierung des Accept-Modells, gemäß dem eine Stimme der Ziel-Nutzergruppe zugeordnet wird, wurden Sprachproben von 13 bis 25-jährigen jungen Frauen verwendet. Das entsprechende Reject-Modell, auf dessen Basis eine Stimme als nicht zur Ziel-Nutzergruppe gehörig identifiziert wird, wurde mit männlichen und weiblichen Kindern bis 13 Jahre, mit männlichen Stimmen jeden Alters sowie mit männlichen Stimmen und Kinderstimmen vorgenommen, die versuchen, eine junge Frauenstimme zu imitieren. Gemäß einem derart trainierten Modell wird nunmehr identifiziert, ob der Nutzer zu der Ziel-Nutzergruppe der weiblichen Personen zwischen 13 und 18 Jahren gehört. Entspricht die Stimme des Nutzers U tatsächlich der Ziel-Nutzergruppe, wird der Nutzer entsprechend benachrichtigt, beispielsweise durch eine Email, SMS und dergleichen, was durch den Pfeil P10 angedeutet ist. Die Email bzw. SMS wird dabei durch den Terminal T empfangen und enthält die Zugangsdaten für den Online-Dienst SE.

Die Zugangsdaten können auch über andere Kommunikationswege, beispielsweise über eine Sprachausgabe durch das Sprachdialogsystem SDS an den Nutzer übertragen werden. Parallel zur Übermittlung der Zugangsdaten an den Terminal T wird auch die Zugangskontrolleinheit über die Zugangsdaten informiert (Pfeil P10'). Ebenso ist es möglich, dass die Zugangsdaten nach Aufforderung durch die Sprachverarbeitungseinheit durch die Zugangskontrolleinheit erzeugt werden und von dieser an den Nutzer übermittelt werden. Die Zugangskontrolleinheit kann auch ein Bestandteil eines Gesamtauthentifizierungssystems mit Sprachverarbeitungseinheit und Zugangskontrolle sein.

Sollte bei der stimmbasierten Alters-Geschlechts-Überprüfung AGC die Stimme nicht eindeutig der geschützten Zielgruppe von jugendlichen Frauen zuordenbar sein, wird der Nutzer über das Sprachdialogsystem SDS hierüber informiert und zu einer alternativen Alters-Geschlechts-Überprüfung AAGC aufgefordert (Pfeil P11'). Die alternative Alters-Geschlechts-Überprüfung kann beispielsweise darin bestehen, dass der Nutzer weitere Daten zur Authentifizierung dem System bereitstellt, beispielsweise indem er eine Kopie seines Passes oder Ausweises übermittelt oder die Daten seiner Kreditkarte bekannt gibt. Diese Daten werden dann von einer weiteren Authentifizierungsstelle überprüft, wobei im Falle, dass durch die Daten nachgewiesen wird, dass der Nutzer zu der Zielgruppe von jungen Frauen gehört, dieser Nutzer ebenfalls für den Dienst durch Bereitstellung entsprechender Zugangsdaten freigeschaltet wird. Die Bereitstellung von alternativen Daten zur alternativen Alters-Geschlechts-Überprüfung AAGC ist dabei durch den Pfeil P12 in Fig. 1 dargestellt.

Es besteht darüber hinaus die Möglichkeit, dass auf die Durchführung einer alternativen Alters-Geschlechts-Überprüfung verzichtet wird, wenn durch das System festgestellt wird, dass der Nutzer bereits mehrmals erfolglos versucht hat, sich über seine Stimme zu authentifizieren. Dabei wird der Nutzer z.B. durch seine Telefonnummer, über welche er das Sprachdialogsystem anruft, erkannt. Bei einer vorbestimmten Anzahl von Fehlversuchen erfolgt eine Sperrung der Telefonnummer für eine nochmalige Alters-Geschlechts-Überprüfung, wie wiederum durch den Pfeil P8" und den Block BL angedeutet ist. Bei abschließend erfolgreicher Alters-Geschlechts-Überprüfung entweder gemäß Verfahrensschritt AGC oder alternativ über Verfahrensschritt AAGC kann sich der Nutzer über die ihm bereitgestellten Zugangsdaten bei dem geschützten Online-Dienst anmelden und diesen Dienst nutzen (Pfeil P13).

Mit der im Vorangegangenen beschriebenen Ausführungsform des erfindungsgemäßen Verfahrens wird eine stimmbasierte Alters-Geschlechts-Überprüfung in geeigneter Weise zur Bereitstellung eines Dienstes für vorbestimmte Ziel-Nutzergruppen eingesetzt. Um einen Schutz gegen Angreifer, welche nicht zur Ziel-Nutzergruppe gehören, zu verbessern, wurde zusätzlich ein Spracherkenner eingesetzt, der eine zufällig generierte Textsequenz mit einer Sprachprobe des Nutzers vergleicht. Auf diese Weise wird vermieden, dass vorab aufgenommene Sprachproben mit Stimmen von Personen, die zur Ziel-Nutzergruppe gehören, zur Authentifikation für den geschützten Dienst eingesetzt werden. Es sind auch noch weitere Maßnahmen denkbar, mit denen die Sicherheit des Systems gegenüber Angreifern verbessert werden kann, wobei diese Maßnahmen nachfolgend erläutert werden.

Zum einen kann das statistische Modell, welches der Alters-Geschlechts-Überprüfung zu Grunde liegt, derart eingestellt werden, dass eine starke Tendenz des Modells dahingehend besteht, eine nicht eindeutig zu der Ziel-Nutzergruppe zuordenbare Stimme zurückzuweisen, um die Rate von akzeptierten falschen Nutzern sehr klein zu halten. Sollte es dabei zu nicht gerechtfertigten Fehlabweisungen von Nutzern kommen, haben diese immer noch die Möglichkeit, sich auf einem anderen Weg über die alternative Alters-Geschlechts-Überprüfung AAGC zu authentifizieren.

Ferner ist es möglich, die Qualität der Authentifizierung durch eine begleitende menschliche Interaktion zu optimieren. Hierbei werden die durch die Alters-Geschlechts-Überprüfung ermittelte Konfidenzen von akzeptierten Nutzern betrachtet. Solche Konfidenzen werden im Regelfall immer durch eine Alters-Geschlechts-Überprüfung ermittelt und sie stellen ein Wahrscheinlichkeitsmaß dar, welches angibt, wie wahrscheinlich der Nutzer der Ziel-Nutzergruppe richtig zugeordnet wurde. Die begleitende menschliche Interaktion kann dabei im Rahmen einer Offline-Prozedur verwirklicht sein. Dabei werden akzeptierte Nutzer mit geringer Konfidenz, d.h. Nutzer, bei denen sich die Alters-Geschlechts-Überprüfung unsicher ist, ob der Nutzer tatsächlich zur Ziel-Nutzergruppe gehört, durch einen menschlichen Operator überprüft. Dieser Operator hört sich die Stimme des Nutzers an und klassifiziert diese dahingehend, ob der Nutzer zu der Ziel-Nutzergruppe gehört oder nicht. Der menschliche Operator kann dabei die Stimme in manchen Fällen besser klassifizieren als dies mit einem automatischen Alters-Geschlechts-Klassifikationsverfahren möglich ist. Ferner kann der menschliche Operator Kontakt zu dem Nutzer herstellen, beispielsweise durch einen Anruf, um weitere Daten zur Alters-Geschlechts-Klassifizierung zu erheben ("Interview"). Stellt der Operator fest, dass eindeutig ein Eindringling vorliegt, wird der dem akzeptierten Nutzer bereits erteilte Zugang zu dem Dienst entzogen und sein Account gesperrt.

Die aufgenommenen Sprachproben von Eindringlingen in Kombination mit der Klassifikation des menschlichen Operators können ferner zur Verbesserung des Klassifikationsverfahrens herangezogen werden, und zwar indem das Reject-Modell des Alters-Geschlechts-Klassifikationsverfahrens damit trainiert wird.

Anstatt der oben beschriebenen Offline-Prozedur, bei der bereits akzeptierte Nutzer mit gültigen Zugangsdaten zu einem späteren Zeitpunkt nochmals überprüft werden, kann die Interaktion mit dem menschlichen Operator auch als Online-Prozedur durchgeführt werden. Dabei werden zeitnah zum Authentifizierungsprozess Nutzer mit geringen Konfidenzen von einem menschlichen Operator überprüft, wobei Zugangsdaten nur dann erteilt werden, wenn der Operator zu dem Ergebnis kommt, dass der Nutzer tatsächlich zur Ziel-Nutzergruppe gehört.

In einer weiteren Ausgestaltung des erfindungsgemäßen Verfahrens kann ein Sprecher-Erkenner zur Erhöhung der Zuverlässigkeit der Alters-Geschlechts-Überprüfung eingesetzt werden. Ein Sprecher-Erkenner erfasst dabei die Stimmcharakteristik der vom Nutzer bereitgestellten Sprachprobe. In einer Ausgestaltung kann der Sprecher-Erkenner die Stimmcharakteristik am Anfang und am Ende der Sprachprobe miteinander vergleichen. Sollte er feststellen, dass sich die Stimmcharakteristik am Anfang und Ende stark unterscheiden, liegt möglicherweise ein Eindringversuch dahingehend vor, dass der Nutzer seine Stimme verstellt hat, um eine junge Frauenstimme zu imitieren, wobei sich die Stimmverstellung jedoch während des Sprechens verschoben hat.

Ferner besteht die Möglichkeit, dass der Sprecher-Erkenner die Stimmcharakteristika verschiedener Nutzer, welche bereits zuvor mit dem Sprachdialogsystem kommuniziert haben, miteinander vergleicht. Sollte der Sprecher-Erkenner feststellen, dass die Stimmcharakteristik verschiedener Nutzer sehr ähnlich ist, liegt wiederum möglicherweise ein Eindringversuch vor, bei dem die Stimme derselben Person von mehreren Nutzern dazu benutzt wurde, um sich einen Zugang zu dem Dienst zu verschaffen. Um die vergleichende Überprüfung verschiedener Nutzer effektiver zu gestalten, können insbesondere nur Nutzer mit gleichen Charakteristika überprüft werden, wobei diese gleichen Charakteristika beispielsweise spezifiziert sind durch die Telefonnummer oder eines Teils der Telefonnummer (z.B. der Vorwahl), von welcher aus der Nutzer anruft, durch den auf andere Weise ermittelten Nutzerstandort bzw. durch die IP-Adresse, welche der Nutzer verwendet.

Zur weiteren Verbesserung des Schutzes des Dienstes vor unerlaubtem Eindringen kann ferner in regelmäßigen Abständen oder zufällig ein Nutzer aufgefordert werden, sich einer erneuten Alters-Geschlechts-Überprüfung zu unterziehen. Dabei überprüft ein Sprecher-Erkenner, der die Stimmcharakteristik des Nutzers erfasst, ob sich diese Stimmcharakteristik zwischen zeitlich auseinander liegenden Alters-Geschlechts-Überprüfungen deutlich verändert hat. Auf diese Weise können Eindringversuche erkannt werden, bei denen der Eindringling bei einer früheren Alters-Geschlechts-Überprüfung eine Person aus der Ziel-Nutzergruppe benutzt hat, um sich unerlaubten Zugang zu dem Dienst zu verschaffen, wobei diese Person aus der Ziel-Nutzergruppe bei der erneuten Alters-Geschlechts-Überprüfung nicht mehr zur Verfügung steht und durch eine andere Person ersetzt wird. Ferner werden solche Eindringversuche identifiziert, bei denen sich ein Nutzer unerlaubt durch Verstellen seiner Stimme bei einer früheren Alters-Geschlechts-Überprüfung Zugang zu dem Dienst verschafft hat, wobei es ihm bei der wiederholten Alters-Geschlechts-Überprüfung nicht mehr gelingt, die imitierte Stimme exakt zu reproduzieren.

Die Sicherheit vor Eindringversuchen zu dem geschützten Dienst kann in einer weiteren Ausgestaltung durch sog. "Anmeldersignaturen" erhöht werden. Anmeldersignaturen sind beispielsweise die Telefonnummer, über die der Nutzer das Sprachverarbeitungssystem kontaktiert, die IP-Adresse, über die der Nutzer bei der Verwendung von VoIP mit dem Sprachverarbeitungssystem verbunden ist, die Lage der Mobilfunkzelle, in der sich der Nutzer befindet, sofern er zu dem Sprachverarbeitungssystem über sein Mobiltelefon Kontakt aufnimmt. Die Anmeldersignatur kann dabei derart genutzt werden, dass mehrfach nicht erfolgreiche Eindringversuche (z.B. drei Versuche) mit derselben Anmeldersignatur zur Sperrung dieser Anmeldersignatur führen. Nimmt ein Nutzer mit der gleichen Signatur dann wiederum Kontakt zu dem Sprachverarbeitungssystem auf, wird ihm eine erneute stimmbasierte Alters-Geschlechts-Überprüfung verweigert. Auf diese Weise wird sichergestellt, dass ein Nutzer nicht beliebig oft versuchen kann, sich beispielsweise durch Stimmenimitation Zugang zu dem Dienst zu verschaffen.

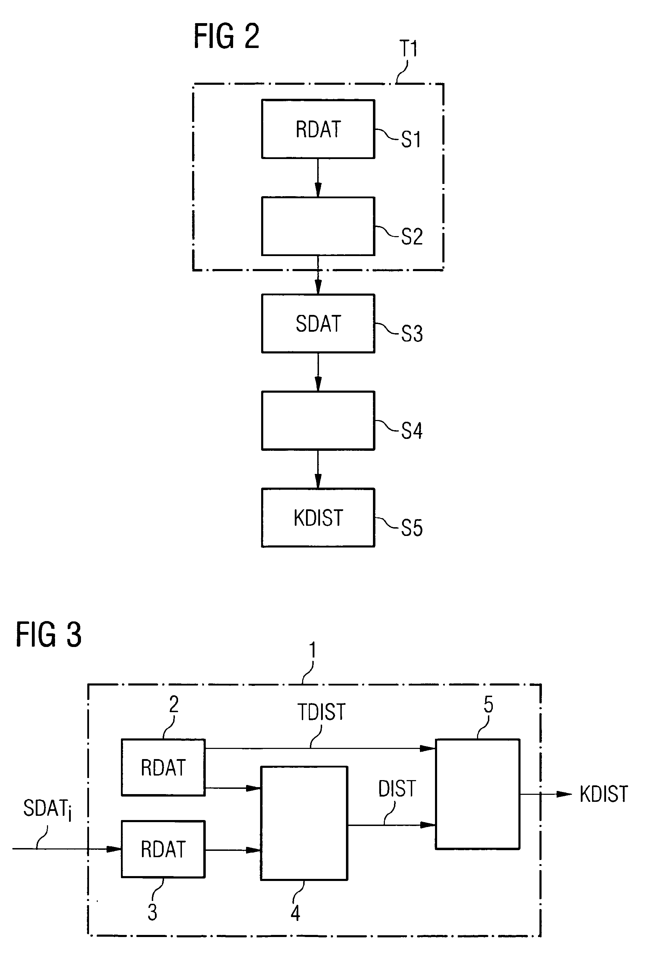

Die in dem erfindungsgemäßen Verfahren verwendete Alters-Geschlechts-Überprüfung erfolgt mit Hilfe eines entsprechenden Klassifikationsverfahrens, wobei hierfür aus dem Stand der Technik bekannte Verfahren verwendet werden können. Insbesondere kann in einer besonders bevorzugten Ausführungsform mit dem Klassifikationsverfahren auch eine Klassifizierungsverteilung erstellt werden, aus der ersichtlich ist, wie häufig verschiedene Alters-Geschlechts-Gruppen versuchen, sich Zugang zu dem geschützten Dienst zu verschaffen. Im Folgenden wird eine spezielle Ausführungsform eines Klassifkationsverfahrens mit optimierter Klassifizierungsverteilung anhand von Fig. 2 und Fig. 3 beschrieben.

Fig. 2 zeigt die grundsätzliche Abfolge von Verfahrensschritten, wie sie bei der nachfolgend beschriebenen Variante des Verfahrens zum Klassifizieren von Daten auftreten. Es ist vorgesehen, in einem mit T1 bezeichneten Trainingsschritt zunächst die Eigenschaften des verwendeten Klassifizierungsverfahrens zu prüfen. Dies umfasst die Anwendung eines an sich bekannten Klassifizierungsverfahrens auf Referenzdaten, sowie eine Fehlerbestimmung von tatsächlichen Klassenzugehörigkeiten der Referenzdaten und die Zuordnung durch das Klassifizierungsverfahren.

Referenzdaten RDAT können beispielsweise kommerziell erhältliche Datenbanken mit Sprachdaten unterschiedlicher Sprecher umfassen. Dabei sind die jeweiligen Eigenschaften der Sprecher, welche die jeweiligen Äußerungen oder Sprachaufnahmen erzeugt haben, bekannt. In der vorangegangenen Anwendung ist es gewünscht, die erhaltenen Anrufe bzw. Anrufer in Klassen einzuordnen, die vom Alter und Geschlecht des Anrufers abhängen. Beispiele solcher Klassifizierungen umfassen eine Klassifizierung in eine erste Kinderklasse CH für Anrufer mit einem Alter von beispielsweise weniger als 14 Jahren. Eine zweite Klasse YN kann junge Erwachsene männlichen Geschlechts in einem Alter zwischen 14 und 20 Jahren umfassen. Eine dritte Gruppe könnte entsprechende junge weibliche Erwachsene YF aufweisen. Als vierte Gruppe oder Klasse werden zum Beispiel männliche Erwachsene AM in einem Alter zwischen 20 und 65 erfasst, und als fünfte Gruppe analog weibliche Erwachsene AF. Außerdem kann eine sechste Gruppe männliche Senioren SM in einem Alter von über 65 und eine siebte Gruppe entsprechende weiblicher Senioren SF umfassen.

Für die im Trainingsschritt T1 zu klassifizierenden Referenzdaten RDAT sind die jeweiligen Klassenzugehörigkeiten bekannt. In einem ersten Unterschritt S1 erfolgt damit eine Klassifizierung mit Hilfe des Klassifizierungsverfahrens oder eines entsprechenden Klassifikators, der beispielsweise ein Computerprogramm sein kann. Dadurch ergibt sich eine Klassenverteilung DIST, welche im Idealfall mit der tatsächlichen Klassenzugehörigkeit TDIST übereinstimmt.

In einem zweiten Trainingsschritt S2 werden nun die Abweichungen, zum Beispiel die Differenzen zwischen dem relativen Anteil der tatsächlichen Zuordnung und dem relativen Anteil der durch das Klassifizierungsverfahren vorgenommenen Zuordnung der Referenzdaten, ermittelt. Insgesamt kann auch ein Maß für die Klassifizierungsungenauigkeit oder der Klassifizierungsfehler CE berechnet werden, der im Wesentlichen die Hälfte der Summe der jeweiligen Abweichungen in den prozentualen Anteilen entsprechen. Dies ist weiter unten näher erläutert.

Im Folgeschritt S3 werden nun vorhandene Datenproben, wie beispielsweise Anrufer bzw. aufgezeichnete Sprachdaten eines jeweiligen Anrufers, mittels dem bekannten Klassifizierungsverfahren klassifiziert. Die zu klassifizierenden Daten sind mit SDAT bezeichnet und umfassen eine vorgegebene Anzahl von Datenproben. Eine Datenprobe entspricht dabei zum Beispiel einem Anruf. Im Ergebnis wird somit eine Klassifizierungsverteilung DIST bestimmt. Da das Klassifizierungsverfahren zwangsläufig nicht alle Datenproben korrekt zuordnen kann, erfolgt im Schritt S4 eine Korrektur dieser (vorläufigen) Klassifizierungsverteilung DIST.

Der Fehler, welcher durch das Klassifizierungsverfahren hervorgerufen ist, hängt dabei auch von der Verteilung der jeweiligen Anrufer ab. Beispielsweise kann der Fall auftreten, dass systematisch Datenproben, die männlichen Erwachsenen AM entsprechen, mit Datenproben, die jüngeren Erwachsenen YM entsprechen, vertauscht werden. In Kenntnis dieser Tendenz des Klassifizierungsverfahrens, diese beiden Klassen AM, YM miteinander zu vertauschen, bzw. eine Fehlzuordnung von AM auf YM vorzunehmen, kann nun eine Korrektur der erhaltenen Verteilung erfolgen. Im Ergebnis liefert das Verfahren im Schritt S5 dann eine optimierte Verteilung KDIST die der tatsächlichen Verteilung eher entspricht.

Das in der Figur 2 dargestellte Verfahren kann zum Beispiel in einer Klassifizierungsvorrichtung, wie sie in der Figur 3 gezeigt ist, durchgeführt werden. Dazu ist in der Figur 2 ein Blockdiagramm einer Vorrichtung, die beispielsweise Computer implementiert auf einem PC ablaufen kann, dargestellt.

Die Vorrichtung 1 zum Klassifizieren von Daten weist dabei insbesondere eine Steuereinheit 5 auf, die die Auswertung und Korrektur von durch einen Klassifikator 4 erzeugten Verteilungen DIST übernimmt. Die Vorrichtung 1 ist mit einem optionalen Speicher 2 für Referenzdaten RDAT ausgestattet und weist einen Klassifizierungsdatenspeicher 3 zum Zwischenspeichern der zu klassifizierenden Daten SDAT auf. Zum Beispiel können Datenproben SDATi der Klassifizierungsvorrichtung 1 zugespielt werden und in dem Klassifizierungsspeicher 3 zwischengespeichert werden.

Die Steuereinheit 5 koordiniert dabei zum Beispiel die Durchführung der in der Figur 2 schematisch angedeuteten Verfahrensschritte.

Das heißt, zunächst werden die Referenzdaten RDAT durch den Klassifikator 4 klassifiziert, wodurch die Klassifizierungs- oder Steuereinheit 5 eine Verteilung erstellt. Diese kann mit der tatsächlichen Verteilung TDIST in Kenntnis der im Referenzdatenspeicher 2 abgespeicherten Referenzdaten verglichen werden. Schließlich erzeugt die Klassifikatoreinheit 4 auch von den zu klassifizierenden Daten SDAT eine Verteilung DIST. Durch Anwendung der Korrekturen gemäß einem im Folgenden beispielhaft näher erläuterten Verfahren ergibt sich eine korrigierte oder optimierte Verteilung KDIST. Im Weiteren sei eine beispielhafte Vorgehensweise zum Berechnen der korrigierten Verteilung KDIST näher erläutert.

Die Fehler des Klassifikators bzw. des verwendeten Klassifizierungsverfahrens schlagen sich im Wesentlichen in Vertauschungen zwischen den Klassen nieder. Diese Vertauschungen zwischen korrekt und fehlerhaft zugeordneten Datenproben auf die vorgegebenen Klassen sind auf genügend großen Anrufermengen ähnlich groß. Diese Fehler können als eine lineare Abbildung von der tatsächlichen Verteilung zu der beobachteten Verteilung verstanden werden. Ein Maß CE für einen Klassifizierungsfehler kann beispielsweise wie folgt lauten:

$$CE = \sum_{Klassen} \left| \text{tatsächlicher Anteil - zugeordneter Anteil} \right| / 2$$

Diese Abbildung kann mittels einer Trainingsmenge, bzw. Referenzdatenproben, mit bekannten Klassenzugehörigkeiten ermittelt werden, und für die Korrektur der inhärent fehlerbehafteten Klassifizierungsverteilung DIST invertiert werden.

Mathematisch kann diese Vorgehensweise wie folgt beschrieben werden. $\Omega$ wird als die Menge aller möglichen Anrufe bzw. Datenproben oder Referenzdatenproben aufgefasst. Die Abbildung $X: \Omega \to \{1,..., n\}$ ist die Zufallsvariable der tatsächlichen Klassenzugehörigkeit, wobei n Klassen angenommen werden. Im Beispielsfalls der Anruferklassifizierung sind n = 7, nämlich CH, YM, YF, AM, AF, SM, SF vorgesehen. $Y: \Omega \to \{1,..., n\}$ stellt die Zufallsvariable dar, welche den Klassifikationsergebnissen durch das Klassifizierungsverfahren entspricht. Für einen idealen Klassifikator gilt dabei X = Y.

$A \subset \Omega$ sei nun eine endliche Teilmenge von Anrufen, die untersucht wird. $X' : A \to \{1,..., n\}$ und $Y': A \to \{1,..., n\}$ sind dann die Einschränkungen von X und Y auf A. Somit sind X' die Klassenzugehörigkeiten der Anrufer, also die Referenzverteilung oder Klassenzugehörigkeiten der Referenzdatenproben, und Y' sind die Klassifikationsergebnisse, welche von einem vorgegebenen Verfahren geliefert werden.

Gesucht sind jetzt die Verteilungen der Klassenzugehörigkeiten p(X'=i), wobei die Verteilungen der Klassifikationsergebnisse p(Y'=i) bekannt sind. Es wird davon ausgegangen, dass auf genügend großen Anrufermengen die Vertauschungen zwischen Klassen in der Regel gleich sind, d.h. es existieren Konstanten $c_{i,j}$, so dass für fast alle A näherungsweise gilt:

$$p(Y'=i \mid X'=j) \approx c_{i,j}.$$

Die $c_{i,j}$ können zum Beispiel als Matrixdarstellung einer linearen Abbildung verstanden werden. Aus einer vorgegebenen Anzahl von bekannten Referenzdatenproben mit bekanntem X' können die $c_{i,j}$ aus den relativen Häufigkeiten für die Klassen geschätzt werden. Die Lösung dieses Invertierungsproblems kann mittels einem Gleichungssystem unter Verwendung der bedingten Wahrscheinlichkeit erfolgen:

$$p(Y'=j) = \sum_{i=1...n} p(Y'=j, X'=i) = \sum_{i=1...n} p(Y'=j \mid X'=i) \cdot p(X'=i) = \sum_{i=1...n} c_{i,j} p(X'=i).$$

Somit erhält man eine Korrekturabbildung $c_{i,j}$, mittels derer die Klassifizierungsverteilung DIST optimiert werden kann, um eine zuverlässigere Verteilung auf Klassen zu erzielen.

Die $c_{i,j}$ können somit auf mit bekannten Klassenzugehörigkeiten bestimmt werden, indem die relativen Häufigkeiten bzw. Anteile der jeweiligen fehlerhaften Zuordnungen durch das Klassifizierungsverfahren gezählt werden.

Anschließend wird die sich ergebende Matrix der $c_{i,j}$ invertiert. Zur Ermittlung der Klassenverteilungen $p(X'=i)$ wird der entsprechende Vektor der durchschnittlichen Klassifikationsergebnisse $p(Y'=i)$ zum Korrigieren der erhaltenen (suboptimalen) Verteilung mit dieser inversen Matrix multipliziert. Durch diese Multiplikation können prinzipiell auch Werte auftreten, die größer 100% und kleiner 0% sind. Diese werden zum Beispiel abgeschnitten, und anschließend wird das Ergebnis auf 100% normiert.

Im Folgenden ist eine weitere Variante des Verfahrens zum Klassifizieren von Daten bzw. zum Korrigieren von durch ein bekanntes Klassifizierungsverfahren erhaltenen Klassifizierungsverteilungen erläutert. Im Wesentlichen basiert diese Variante auf der mathematischen Beschreibung wie zuvor.

Einige Klassifikatoren liefern neben der wahrscheinlichsten Klassenzugehörigkeit einer Datenprobe ferner auch eine Konfidenz, die beschreibt, wie sicher sich der Klassifikator bei dem Zuordnungsergebnis ist. Es wird angenommen, dass je geringer der Konfidenzwert im Mittel ausfällt, desto wahrscheinlicher Zuordnungsfehler aufgetreten sind.

Die Konfidenz oder Zuordnungssicherheit wird als weitere Zufallsvariable $F: \Omega \to R^m$, beschrieben, die jedem Anruf bzw. Daten- oder Referenzdatenprobe, einen m-dimensionalen Merkmalsvektor zuordnet. Bekannt sind daher nicht nur die $p(Y'=i)$, sondern auch alle sogenannten a-posteriori Wahrscheinlichkeiten oder Konfidenzen $p(X=i|F=f)$ bei einem gegebenem Merkmalsvektor f. Gesucht ist nach wie vor die Vertauschungsmatrix $p(Y'=i|x'=j)$, welche nun für jedes A berechnet wird.

Die Vertauschungswahrscheinlichkeit kann als genauso hoch angenommen werden wie die a-posteriori Wahrscheinlichkeit für ein falsches Klassifikationsergebnis. Somit gilt für ausreichend große A, dass die Vertauschungsverteilung auf A ungefähr so groß ist wie die durchschnittliche a-posteriori Wahrscheinlichkeit, dass der Klassifikator falsche Ergebnissen zuordnet. Dies kann anschaulich ausgedrückt werden als:

$$p(Y'=j \mid X'=i) \approx p(X=j \mid F=f_{X',i}),$$

wobei $f_{x',1}$ diejenigen Merkmalsvektoren sind, die den Anrufern bzw. Datenproben aus der Klasse i zugeordnet werden. Da die Klassenzugehörigkeit X' a-priori nicht bekannt ist, sondern nur die Klassifikationsergebnisse Y' vorliegen, sind nur die $p(X=j|F=f_{Y',i})$ bekannt. Man kann jedoch Annahmen über die Verteilung der a-posteriori Wahrscheinlichkeiten vornehmen, so dass die $p(X=j|F=f_{x',i})$ abgeschätzt werden können.

Dies sei an einem 2-Klassenzuordnungsproblem mit symmetrischen Vertauschungen beispielhaft verdeutlichet. Man kann dann zum Beispiel zeigen, dass für $i \neq j$:

$$p(Y'=j \mid X'=i) \approx 0,5 \; [p(X=1 \mid F=f_{Y',2}) + p(X=2 \mid F=f_{Y',1})]$$

und für $i = j$:

$$p(Y'=i \mid X'=i) \approx 0,5 \; [p(X=1 \mid F=f_{Y',1}) + p(X=2 \mid F=f_{Y',2})]$$

gilt. Diese Abschätzung für $c_{i,j}$ liefert ebenfalls weiter verbesserte Korrekturen für die Verteilungen auf die Klassen in der jeweiligen Klassifizierungsverteilung.

Obwohl die vorliegende Erfindung anhand bevorzugter Ausführungsbeispiele näher erläutert wurde, ist sie nicht darauf beschränkt, sondern vielfältig modifizierbar. Insbesondere bei der Wahl der zugrunde gelegten Klassifizierungsverfahren kann dem Anwender freie Hand gelassen werden. Die genannten Klassen in Geschlechts-Altergruppen sind ebenfalls lediglich beispielhaft zu verstehen. Die im Vorangegangenen beschriebene Klassifikation von Daten bzw. Datenproben lässt sich zumindest immer dann günstig einsetzen, wenn Referenz- oder Trainingsdaten erhältlich sind und Abweichungen von korrekten Zuordnungen durch das Klassifizierungsverfahren ermittelt werden können.

**Patentansprüche**

1. Verfahren zur Bereitstellung eines Dienstes (SE) für einen Nutzer (U), wobei der Dienst (SE) für eine vorgegebene Nutzergruppe vorgesehen ist und über eine Kommunikationsverbindung bereitgestellt wird, bei dem:

a) über eine erste Kommunikationsverbindung eine Anfrage des Nutzers (U) zum Zugang zu dem Dienst (SE) in einer Zugangskontrolleinheit (AC) empfangen wird;

b) über eine zweite Kommunikationsverbindung eine Sprachverbindung zwischen dem Nutzer (U) und einer Sprachverarbeitungseinheit hergestellt wird;

c) in der Sprachverarbeitungseinheit über die zweite Kommunikationsverbindung die Stimme des Nutzers (U) mittels einer Sprachprobe erfasst wird und zumindest ein erstes Kriterium überprüft wird, wobei das erste Kriterium erfüllt ist, wenn der Nutzer (U) basierend auf einem stimmbasierten Klassifikationsverfahren (AGC) der vorgegebenen Nutzergruppe zugeordnet wird;

d) falls zumindest das erste Kriterium erfüllt ist, dem Nutzer (U) der Zugang zu dem Dienst (SE) ermöglicht wird.

2. Verfahren nach Anspruch 1, bei dem in Schritt d) dem Nutzer (U) über die erste und/oder zweite Kommunikationsverbindung Authentifikationsdaten zum Zugang zu dem Dienst (SE) mittels einer Authentifikation an der Zugangskontrolleinheit (AC) bereitgestellt werden.

3. Verfahren nach Anspruch 1 oder 2, bei dem das stimmbasierte Klassifikationsverfahren (AGC) ein Alters- und/oder Geschlechts-Klassifikationsverfahren ist, welches basierend auf der erfassten Stimme des Nutzers (U) das Alter und/oder das Geschlecht des Nutzers (U) klassifiziert.

4. Verfahren nach Anspruch 3, bei dem das Alters- und/oder Geschlechts-Klassifikationsverfahren den Nutzer (U) in das Geschlecht männlich oder weiblich und/oder in eine Altersgruppe aus einer Mehrzahl von Altersgruppen klassifiziert.

5. Verfahren nach einem der vorhergehenden Ansprüche, bei dem der Nutzer (U) in Schritt c) durch die Sprachverarbeitungseinheit aufgefordert wird, einen vorgegebenen Text als Sprachprobe nachzusprechen, und anschließend ein zweites Kriterium überprüft wird, wobei das zweite Kriterium erfüllt ist, wenn der durch ein Spracherkennungsverfahren erkannte nachgesprochene Text im Wesentlichen mit dem vorgegebenen Text übereinstimmt, und wobei dem Nutzer (U) ein Zugang zu dem Dienst nur ermöglicht wird, wenn zumindest das erste und zweite Kriterium erfüllt sind.

6. Verfahren nach Anspruch 5, bei dem der vorgegebene Text durch einen Zufallsgenerator (RG) erzeugt wird und dem Nutzer (U) auf einer Anzeigeeinheit angezeigt wird und/oder dem Nutzer (U) über die bestehende Sprachverbindung vorgelesen wird.

7. Verfahren nach einem der vorhergehenden Ansprüche, bei dem das stimmbasierte Klassifikationsverfahren (AGC) einen Konfidenzwert bestimmt, der angibt, mit welcher Wahrscheinlichkeit eine Klassifikation eines Nutzers (U) in der vorgegebenen Nutzergruppe korrekt ist, wobei im Falle, dass der Konfidenzwert einen ersten Schwellenwert überscheitet, der Nutzer (U) der vorgegebenen Nutzergruppe zugeordnet wird.

8. Verfahren nach Anspruch 7, bei dem der erste Schwellenwert einstellbar ist.

9. Verfahren nach Anspruch 7 oder 8, bei dem zumindest ein Teil der Nutzer (U), die mit einem Konfidenzwert unterhalb eines zweiten, über dem ersten Schwellenwert liegenden Schwellenwerts der vorgegebenen Nutzergruppe zugeordnet werden, einem menschlichen Operator über eine Benutzerschnittstelle mitgeteilt werden, wobei der menschliche Operator über die Benutzerschnittstelle die erfasste Stimme des oder der Nutzer (U) des zumindest einen Teils der Nutzer (U) abhören kann und die Nutzer (U) manuell klassifizieren kann, wobei ein drittes Kriterium für einen Nutzer (U) erfüllt ist, wenn der menschliche Operator den Nutzer (U) in die vorgegebene Nutzergruppe klassifiziert, und wobei nur bei der Erfüllung des dritten Kriteriums dem Nutzer (U) ein Zugang zu dem Dienst ermöglicht wird.

10. Verfahren nach Anspruch 9, bei dem der menschliche Operator dem Nutzer (U) über eine Kommunikationsverbindung, insbesondere eine Sprachverbindung, kontaktieren kann, um von dem Nutzer (U) Daten zur Klassifikation des Nutzers (U) zu erfassen, insbesondere eine weitere Sprachprobe.

11. Verfahren nach Anspruch 9 oder 10 in Kombination mit Anspruch 2, bei dem einem Nutzer (U) des zumindest einen Teils der Nutzer (U) Authentifikationsdaten zum Zugang zu dem Dienst (SE) nur bereitgestellt werden, wenn das dritte Kriterium für den Nutzer (U) erfüllt ist.

12. Verfahren nach Anspruch 9 oder 10 in Kombination mit Anspruch 2 oder nach Anspruch 11, bei dem ein bereits

EP 2 077 658 A1

bereitgestellter Zugang für einen Nutzer (U) des zumindest einen Teils der Nutzer (U) gesperrt wird, wenn das dritte Kriterium für den Nutzer (U) nicht erfüllt ist.

13. Verfahren nach einem der Ansprüche 9 bis 12, bei dem die von dem menschlichen Operator vorgenommenen Klassifikationen von Nutzern (U) mit den zugeordneten erfassten Stimmen als Trainingsdaten dem stimmbasierten Klassifikationsverfahren (AGC) bereitgestellt werden.

14. Verfahren nach einem der vorhergehenden Ansprüche, bei dem in Schritt c) aus der erfassten Stimme des Nutzers (U) mit einem Sprecher-Erkennungsverfahren die Stimmcharakteristik des Nutzers (U) ermittelt wird.

15. Verfahren nach Anspruch 14, bei dem in Schritt c) ein viertes Kriterium überprüft wird, wobei das vierte Kriterium für einen Nutzer (U) erfüllt ist, wenn die Veränderung der Stimmcharakteristik des Nutzers innerhalb der Sprachprobe nicht größer als ein vorbestimmtes Maß ist, wobei nur bei der Erfüllung des vierten Kriteriums dem Nutzer (U) der Zugang zu dem Dienst ermöglicht wird.

16. Verfahren nach Anspruch 14 oder 15, bei dem in Schritt c) ein fünftes Kriterium überprüft wird, wobei das fünfte Kriterium für einen Nutzer (U) erfüllt ist, wenn seine Stimmcharakteristik zu den Stimmcharakteristika der Nutzer (U) einer Nutzermenge eine Ähnlichkeit aufweist, die unter einem vorbestimmten Maß liegt, wobei nur bei der Erfüllung des fünften Kriteriums dem Nutzer (U) ein Zugang zu dem Dienst ermöglicht wird.

17. Verfahren nach Anspruch 16, bei dem die Nutzermenge über die Telefonnummern und/oder die Standorte und/oder die IP-Adressen der Nutzer (U) spezifiziert wird.

18. Verfahren nach einem der vorhergehende Ansprüche, bei dem die Schritte c) und d) nach Bereitstellung des Dienstes für einen Nutzer (U) wiederholt werden, indem der Nutzer (U) durch die Sprachverarbeitungseinheit erneut zur Erfassung seiner Stimme aufgefordert wird, wobei in Schritt d) ein bereits bestehender Zugang zu dem Dienst (SE) gesperrt wird, wenn das zumindest erste Kriterium nicht erfüllt ist.

19. Verfahren nach Anspruch 18 in Kombination mit einem der Ansprüche 14 bis 17, bei dem bei einer Wiederholung des Schritts c) die aktuell mit dem Sprecher-Erkennungsverfahren ermittelte Stimmcharakteristik des Nutzers (U) mit zumindest einer in einem der vorhergehenden Schritte c) ermittelten Stimmcharakteristik dieses Nutzers (U) verglichen wird, wobei der Zugang des Nutzers (U) zu dem Dienst (SE) gesperrt wird, wenn die aktuelle Stimmcharakteristik über ein vorbestimmtes Maß von der zumindest einen in einem der vorhergehenden Schritte c) ermittelten Stimmcharakteristik abweicht.

20. Verfahren nach einem der vorhergehenden Ansprüche, bei dem in Schritt c) eine dem Nutzer (U) zugeordnete Identifikation erfasst wird, wobei in Schritt c) die bereits von Nutzern (U) erfassten Identifikationen mit der Identifikation des aktuellen Nutzers (U) verglichen werden und im Falle, dass einem Nutzer (U) mit der gleichen Identifikation wie derjenigen des aktuellen Nutzers (U) bereits zuvor ein oder mehrere Male kein Zugang zu dem Dienst ermöglicht wurde, der aktuelle Nutzer (U) unabhängig von der Erfüllung zumindest des ersten Kriteriums kein Zugang zu dem Dienst ermöglicht wird.

21. Verfahren nach Anspruch 20, bei dem die dem Nutzer (U) zugeordnete Identifikation die Telefonnummer des Nutzers (U) und/oder den Standort des Nutzers (U) und/oder die IP-Adresse des Nutzers (U) und/oder die Lage der Mobilfunkzelle, in der sich der Nutzer (U) befindet, umfasst.

22. Verfahren nach einem der vorhergehenden Ansprüche, wobei dem Nutzer (U) eine alternative Authentifizierung zum Zugang zu dem Dienst angeboten wird, falls das zumindest erste Kriterium in Schritt d) nicht erfüllt ist.

23. Verfahren nach einem der vorhergehenden Ansprüche, bei dem in Antwort auf seine Anfrage in Schritt a) dem Nutzer (U) eine Adresse, insbesondere eine Telefonnummer, übermittelt wird, die der Nutzer (U) zum Aufbau der Sprachverbindung gemäß Schritt b) kontaktieren muss.

24. Verfahren nach einem der vorhergehenden Ansprüche, bei dem in Antwort auf seine Anfrage in Schritt a) der Nutzer (U) von der Sprachverarbeitungseinheit zum Aufbau der Sprachverbindung kontaktiert wird.

25. Verfahren nach einem der vorhergehenden Ansprüche, bei dem die erste und/oder die zweite Kommunikationsverbindung eine paketvermittelte und/oder leitungsvermittelte Kommunikationsverbindung ist.

12

**26.** Verfahren nach Anspruch 25, bei dem die erste Kommunikationsverbindung eine Internetverbindung zwischen dem Nutzer (U) und der Zugangskontrolleinheit (AC) ist.

**27.** Verfahren nach Anspruch 25 oder 26, bei dem die zweite Kommunikationsverbindung eine leitungsvermittelte Telefonverbindung und/oder eine VoIP-Verbindung zwischen dem Nutzer (U) und der Sprachverarbeitungseinheit ist.

**28.** Verfahren nach einem der vorhergehenden Ansprüche, bei dem aus den in Schritt c) mit dem stimmbasierten Klassifikationsverfahren (AGC) vorgenommenen Klassifikationen eine Klassifizierungsverteilung erzeugt wird.

**29.** Vorrichtung zur Bereitstellung eines Dienstes (SE) für einen Nutzer (U), wobei der Dienst für eine vorgegebene Nutzergruppe vorgesehen ist und über eine Kommunikationsverbindung bereitgestellt wird, umfassend:

- eine Zugangskontrolleinheit (AC), mit der im Betrieb der Vorrichtung über eine erste Kommunikationsverbindung eine Anfrage eines Nutzers (U) zum Zugang zu dem Dienst empfangbar ist;
- eine Sprachverarbeitungseinheit, mit der im Betrieb der Vorrichtung über eine zweite Kommunikationsverbindung eine Sprachverbindung zwischen dem Nutzer (U) und der Sprachverarbeitungseinheit hergestellt wird, wobei in der Sprachverarbeitungseinheit über die zweite Kommunikationsverbindung die Stimme des Nutzers (U) mittels einer Sprachprobe erfasst wird und zumindest ein erstes Kriterium überprüft wird, wobei das erste Kriterium erfüllt ist, wenn der Nutzer (U) basierend auf einem stimmbasierten Klassifikationsverfahren der vorgegebenen Nutzergruppe zugeordnet wird, wobei im Falle, dass zumindest das erste Kriterium erfüllt ist, dem Nutzer (U) der Zugang zu dem Dienst ermöglicht wird.

**30.** Vorrichtung nach Anspruch 29, welche derart ausgestaltet ist, dass ein Verfahren nach einem der Ansprüche 2 bis 28 mit der Vorrichtung durchführbar ist.

# FIG 1

## FIG 2

```
                              ┌─────── T1
        ┌ ─ ─ ─ ─ ─ ─ ─ ─ ┐
        ┃  ┌──────────────┐
        ┃  │     RDAT     │ ─── S1
        ┃  └──────────────┘
        ┃         │
        ┃         ▼
        ┃  ┌──────────────┐
        ┃  │              │ ─── S2
        ┃  └──────────────┘
        └ ─ ─ ─ ─ ─│─ ─ ─ ┘
                   ▼
           ┌──────────────┐
           │     SDAT     │ ─── S3
           └──────────────┘
                   │
                   ▼
           ┌──────────────┐
           │              │ ─── S4
           └──────────────┘
                   │
                   ▼
           ┌──────────────┐
           │     KDIST    │ ─── S5
           └──────────────┘
```

## FIG 3

```
              ┌─────────────────── 1
  ┌ ─ ─ ─ ─ ─ ─ ─ ─ ─ ─ ─ ─ ─ ─ ─ ─ ─ ─ ─ ─ ┐
  ┃      2              TDIST            5
  ┃   ┌───────┐                      ┌───────┐
  ┃   │ RDAT  │──────────────────────│       │
  ┃   └───────┘                      │       │──► KDIST
SDAT_i   │     ┌───────┐   DIST      │       │
  ──────►┃   ┌───────┐ │       │──────│       │
  ┃   │ RDAT  │──│       │             └───────┘
  ┃   └───────┘  └───────┘
  ┃      3          4
  └ ─ ─ ─ ─ ─ ─ ─ ─ ─ ─ ─ ─ ─ ─ ─ ─ ─ ─ ─ ─ ┘
```

Europäisches
Patentamt

European
Patent Office

Office européen
des brevets

**EUROPÄISCHER RECHERCHENBERICHT**

Nummer der Anmeldung

EP 08 00 7787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 02/03668 A (DEUTSCHE TELEKOM AG [DE]; TRINKEL MARIAN [DE]; STEIMER FRANZ [DE]; MUE) 10. Januar 2002 (2002-01-10) * Seite 1, Zeile 5 - Seite 6, Zeile 19; Abbildungen 1-3 * ----- | 1-30 | INV. H04M3/38 |
| A | EP 1 848 187 A (DEUTSCHE TELEKOM AG [DE]) 24. Oktober 2007 (2007-10-24) * Zusammenfassung * * Absatz [0001] - Absatz [0032]; Abbildungen 1-7 * ----- | 1-30 | |
| A | US 2007/098225 A1 (PICCIONELLI GREGORY A [US] ET AL) 3. Mai 2007 (2007-05-03) * das ganze Dokument * ----- | 1-30 | |
| A | WO 01/69900 A (DEUTSCHE TELEKOM AG [DE]; TRINKEL MARIAN [DE]; HAERTEL ERHARD [DE]; HE) 20. September 2001 (2001-09-20) * Zusammenfassung * * Seite 1, Zeile 7 - Seite 5, Zeile 25; Abbildungen 1-4 * ----- | 1-30 | RECHERCHIERTE SACHGEBIETE (IPC) H04M G06F |
| A,D | DE 20 2007 009355 U1 (SIEMENS AG [DE]) 27. September 2007 (2007-09-27) * das ganze Dokument * ----- | 1-30 | |

Der vorliegende Recherchenbericht wurde für alle Patentansprüche erstellt

| Recherchenort | Abschlußdatum der Recherche | Prüfer |
|---|---|---|
| München | 23. April 2009 | Liebhart, Manfred |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 00 7787

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2009

| Im Recherchenbericht angeführtes Patentdokument | Datum der Veröffentlichung | Mitglied(er) der Patentfamilie | Datum der Veröffentlichung |
|---|---|---|---|
| WO 0203668 A | 10-01-2002 | AU 7636601 A<br>DE 10032756 A1<br>EP 1302058 A1<br>JP 2004503143 T<br>US 2004015355 A1 | 14-01-2002<br>28-03-2002<br>16-04-2003<br>29-01-2004<br>22-01-2004 |
| EP 1848187 A | 24-10-2007 | DE 102006019362 A1<br>US 2007250322 A1 | 25-10-2007<br>25-10-2007 |
| US 2007098225 A1 | 03-05-2007 | KEINE | |
| WO 0169900 A | 20-09-2001 | DE 10012925 A1<br>EP 1266513 A1 | 18-10-2001<br>18-12-2002 |
| DE 202007009355 U1 | 27-09-2007 | WO 2009003824 A1 | 08-01-2009 |

EPO FORM P0461

Für nähere Einzelheiten zu diesem Anhang : siehe Amtsblatt des Europäischen Patentamts, Nr.12/82

**EP 2 077 658 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202007009355 U1
- DE 102007043870